# EUROPEAN PATENT SPECIFICATION

(11) **EP 3 298 746 B1**
(45) Date of publication and mention of the grant of the patent: **06.10.2021**
(21) Application number: 15750685.8
(22) Date of filing: 06.08.2015
(51) Int. Cl.: H04L 29/06, H04L 29/08, G06F 9/445

(54) **OFFLOADING WEB SECURITY SERVICES TO CLIENT SIDE**
OFFLOADING VON WEB-SICHERHEITSDIENSTEN ZUR CLIENT-SEITE
DÉLESTAGE DE SERVICES DE SÉCURITÉ DU WEB VERS LE CÔTÉ CLIENT

(43) Date of publication of application: 28.03.2018
(73) Proprietor: Huawei Technologies Co., Ltd., Longgang District Shenzhen, Guangdong 518129 (CN)
(72) Inventor: GAMPEL, Eran, 80992 Munich (DE); MOLKHO, Adi, 80992 Munich (DE); TOUITOU, Dan, 80992 Munich (DE)
(74) Representative: Gill Jennings & Every LLP
(86) International application number: PCT/EP2015/068172
(87) International publication number: WO 2017/020962

(56) References cited:
- EP-A1- 2 264 957
- WO-A1-2011/064081
- KR-K1- 20150 085 188
- US-A1- 2010 049 792
- US-A1- 2014 325 627
- US-B1- 6 223 287

## Description

### FIELD AND BACKGROUND OF THE INVENTION

The present invention, in some embodiments thereof, relates to a content filtering service and, more particularly, but not exclusively, to a content filtering service based on a script operating at the client terminal.

Web security services like uniform resource locator (URL) filtering in Enterprise or Web Application firewall (WAF) protecting a client terminal from harmful or unwanted content are mostly implemented as a proxy. All traffic flows through the proxy, and every new Hypertext Transfer Protocol (HTTP) request, new page or dynamic request from the client terminal is being analyzed by the proxy service. The original TCP connection is terminated by the proxy, the proxy sends the request to the web server address and the requested content is received by the proxy server. The proxy then pretends to be the web server and may send to the client terminal cached content, modified content or may block content completely. The proxy's operation may be transparent to the client terminal.

US 2014/0325627 relates to authentication system and method for embedded applets. US 6,223,287 relates to method for establishing a secured communication channel over the internet. US 2010/049792 relates to a method and system for providing a runtime vulnerability defense for cross domain interactions for a Web application. WO 2011/064081 relates to a method and apparatus for security validation of user inputs in network applications. EP 2264957 relates to message filtering method, apparatus and system. KR 20150085188 relates to system and method for monitoring mobile download.

### SUMMARY OF THE INVENTION

The object of embodiments of the invention is to reduce load from a content filtering server by providing a content filtering service based on a security script that is distributed by the server for operating locally on a client terminal. The object is solved by the independent claims of this application, and the dependent claims protect further implementation forms.

In particular, various aspects of the present invention are defined in the independent claims. Further technical features of these aspects are defined in the respective dependent claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic illustration of a system having a server for generating script for filtering content from third party network sources and for forwarding the script for execution by a processor of a client terminal that accesses the third party network sources, according to some embodiments of the present invention;
FIG. 2 is a flowchart schematically representing a method for content filtering using a system such as depicted in FIG. 1, according to some embodiments of the present invention;
FIG. 3 is a schematic illustration of a structure of a code stored in a server, according to some embodiments of the present invention;
FIG. 4 is a sequence chart of an exemplary process of content filtering, according to some embodiments of the present invention; and
FIG. 5 is a schematic illustration of rendering flow using JavaScript VMM Layer, according to some embodiments of the present invention.

### DESCRIPTION OF EMBODIMENTS OF THE INVENTION

The present invention, in some embodiments thereof, relates to a content filtering service and, more particularly, but not exclusively, to a content filtering service based on a script operating at the client terminal.

Traffic of content in content filtering services which are implemented at proxy service hardware is limited to the processing power and forwarding capacities of the proxy service hardware. Proxy server(s) provide filtering and security service to large numbers of users simultaneously, and filtering and security services are getting more and more complicated so the processing power they consume increases accordingly. When the capacity limit is reached, some of the client terminals may experience denial of service (DoS) and/or the proxy may allow some of the traffic to pass without being analyzed so the client terminal receives unfiltered data and may be exposed to risk.

According to some embodiments of the present invention, there is provided a content filtering service based on a security script that is distributed by a server for operating locally a browser or an application executed using processor(s) of a client terminal. A code executed in an enterprise server sends a security service in the form of a browser script, such as JavaScript software, that is executed by the browser of the client terminal. The script performs analysis and filtering based on a set of rules and/or conditions provided as part of the script. The server may authenticate the client terminal before sending the script, for example by a cookie key. After initial authentication, all traffic from content sources in the internet may be forwarded directly to the client terminal without additional processing in the server. Optionally, the traffic is forwarded through a routing device or a web server acting as a proxy. This eliminates the bottle neck of the processing power of the server and allows faster bandwidth.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

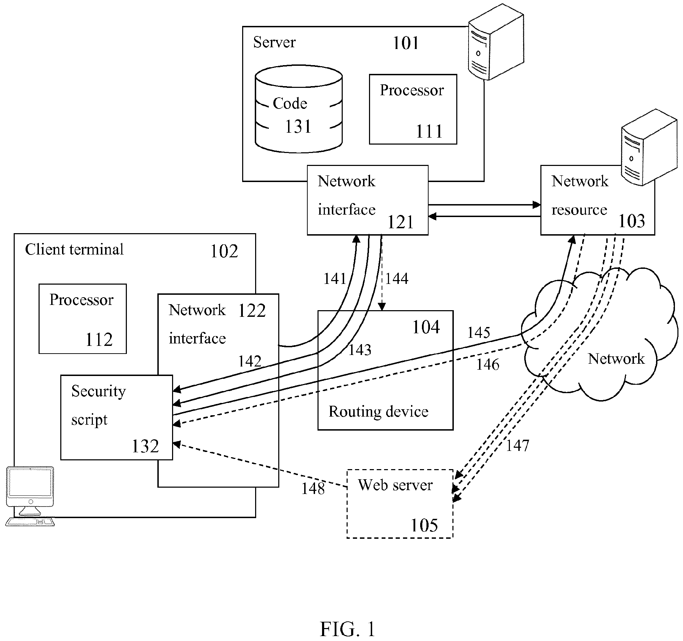

Referring now to the drawings, FIG. 1 is a schematic illustration of a system having a server for generating script for filtering content from third party network sources and for forwarding the script for execution by a processor of a client terminal that accesses the third party network sources, according to some embodiments of the present invention.

The system includes a server 101 connected to client terminal(s) 102. Server 101 may include one or more computing devices, for example, a mainframe computer, an enterprise server, a workstation, multiple connected computers and/or a personal computer. Server 101 generates a security script based on web content requests from client terminals 102 for providing content filtering service to a computer network. The security script is locally used by each client terminal for processing, for instance by filtering, modifying and/or blocking, network data originated from the internet. The processed content may include, for example, potentially harmful content such as malware code, computer viruses, worms and/or trojan horses and/or designated content such as offensive, hostile, intrusive, annoying material such as adware, spam and/or spyware, and/or any other content defined by server 101.

Client terminal(s) 102 may include, for example, a mobile device such as a Smartphone, a tablet, a wearable device such as Google glass, a Smart watch, a laptop computer and/or the like, a personal computer and/or any device that has one or more network communication modules, such as a network card or chip.

The computer network may include, for example, local area network (LAN), a wireless network such as mobile network, wireless local area network (WLAN) such as Wireless Fidelity (WiFi™), a wireless personal area network (WPAN) such as Bluetooth™ protocol and/or any other network.

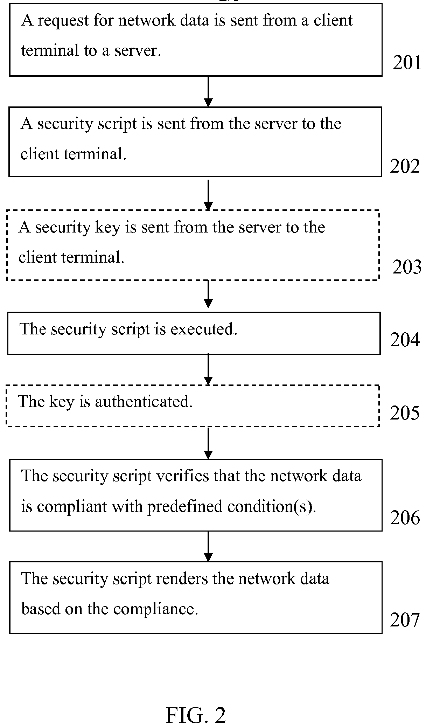

Reference is also made to FIG. 2, which is a flowchart schematically representing a method for content filtering using a system such as depicted in FIG. 1, according to some embodiments of the present invention.

First, as shown at 201, a request for network data stored in a network resource 103 is sent (141) from a network interface 122 of client terminal 102 and received by a network interface 121 of a server 101. The request may be, for example, for a web-document such as a HyperText Markup Language (HTML) document, an image, a text document, an executable file and/or any other file and/or data.

Optionally, the request includes an identifier of client terminal 102, for example an IP address, a MAC address and/or any other identifying code. The identifier is then authenticated by server 101, for example from a list of identifiers.

Then, as shown at 202, a security script 132 is sent (142) from server 101 to client terminal 102. This is done using a code executed by a processor 111 of server 101 and via network interface 121 of server 101.

Optionally, parameters and/or properties of security script 132 that is sent to client terminal 102 are determined by the identity of client terminal 102. The identity is determined for example by the identifier. Optionally, the parameters and/or properties are determined by the identity of the user of client terminal 102 that may be included in the request for network data. Optionally, the parameters and/or properties are determined based on the requested network data, for example, the security script may be dedicated to a specific website, country, language and/or any other parameter.

Optionally, server 101 provides a set of rules and/or conditions for filtering based on the specific identity of client terminal 102 and/or the identity of the user of client terminal 102, as may be verified by the security key. For example, rules sent to a client terminal mostly used by children may include restriction of adult content. Optionally, server 101 provides a set of rules and/or conditions for filtering based on the requested network data.

Security script 132 may be sent to client terminal 102 once after a first network data request from client terminal 102, and/or may be sent after every network data request.

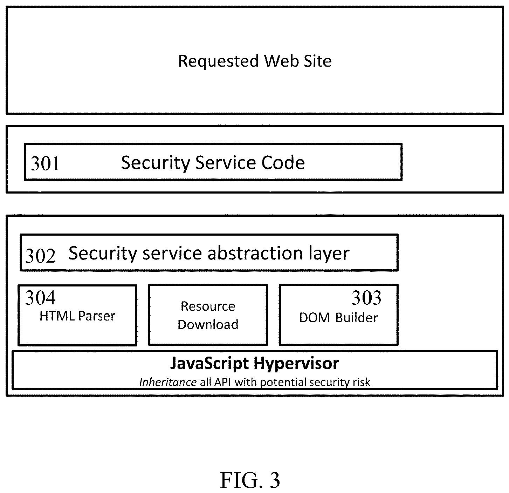

Optionally, updates for security script 132 and/or for the rules and/or conditions are sent from server 101 to client terminal 102, for example periodically and/or upon an update request from client terminal 102. Optionally, security script 132 is a virtual machine monitor (VMM). Reference is now made to FIG. 3, which is a schematic illustration of a structure of a code 131 stored in server 101, according to some embodiments of the present invention. The VMM may be running a security service code 301 and a security service abstraction layer 302 for processing the network data, and/or may be running a Document Object Model (DOM) builder 303 and a HTML parser 304 for loading and rendering at least some of the network data on a display of client terminal 102.

Optionally, server 101 handles multiple requests from multiple client terminals 102 for retrieving multiple different network documents from multiple network resources 103 which are accessible via the network. Network interface 121 is adapted to receive these multiple requests from multiple different client terminals 102. Server 101 then transmits multiple security scripts to each of client terminals 102, each security script is sent in response to one of the requests. Optionally, each security script is unique to a specific client terminal.

Then, optionally, as shown at 203, a security key is also sent (143) from server 101 to client terminal 102 and optionally also sent (144) to a routing device 104 connecting client terminal 102 to the internet. The security key may be a browser cookie installed in a browser and/or an application running on client terminal 102. Optionally, Authentication data is sent from server 101 to client terminal 102 and the cookie is generated and installed by security script 132.

Then, as shown at 204, security script 132 is executed by a processor 112 of client terminal 102 to send a request (145) for the network data via a network interface 122 of client terminal 102. The request may be, for example, a Hypertext Transfer Protocol (HTTP) Get request. Optionally, security script 132 is executed by processor 112 in a restricted operating system environment of client terminal 102, such as a sandbox area. Optionally, the request includes the security key sent to client terminal 102.

Then, optionally, as shown at 205, the key sent from client terminal 102 is authenticated. Optionally, this is done by server 101. Optionally, routing device 104 matches between the key received with the request from client terminal 102 to the key previously received when security script 132 and the security key were sent to client terminal 102 from server 101. The matching may be done, for example, by comparing a signature and/or a code existing in both keys.

Then, as shown at 206, the network data is transferred to client terminal 102 from network resource 103 and received by security script 132. Optionally, the data is transferred (146) by routing device 104, so no intermediate server is used. Optionally, routing device 104 opens a data flow for a direct retrieval of the network data by client terminal 102, following an instruction received from server 101 based on the identifier of client terminal 102. Optionally, the data is transferred by a web server 105 that provides multiple communications channels (147) with multiple network resources 103 over a single Transmission Control Protocol (TCP) connection (148) to client terminal 102. Web server 105 may be, for example, a WebSocket server, XMLHtppReq or any other networking protocol supported by the browser. Optionally, Transparent Cashing is integrated in web server 105.

Then, as shown at 206, security script 132 verifies that the network data is compliant with predefined condition(s). The condition(s) may include any type of rules defined in security script 132.

Then, as shown at 207, security script 132 renders and/or parses at least some of the network data on a display of client terminal 102, based on the compliance of the network data with the predefined condition(s). When the network data is compliant with the condition, the network data may be rendered completely. When the network data is partially compliant with the condition, the network data may be rendered partially or with alterations. When the network data is not compliant with the condition the network data may be blocked.

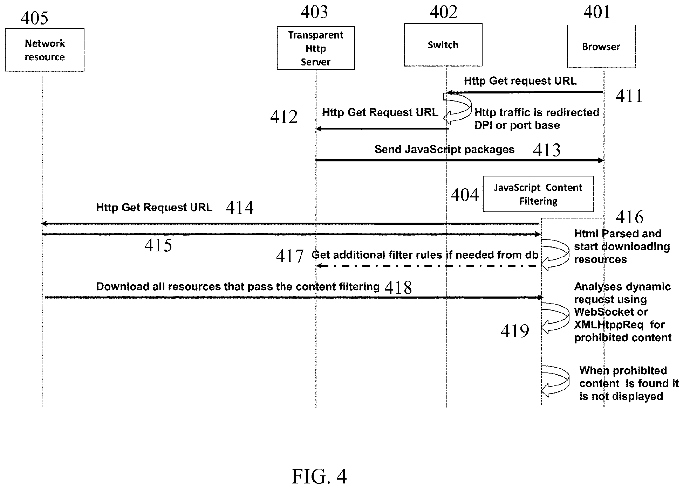

Reference is now made to FIG. 4, which is a sequence chart of an exemplary process of content filtering, according to some embodiments of the present invention. An HTTP Get request is sent (411) from browser 401 to switch 402 and the HTTP traffic is redirected (412) to a server 403. Server 403 sends (413) JavaScript package to browser 401. The JavaScript content filter 404 sends (414) the HTTP Get request to network resource 405 and receives (415) the HTML from network resource 405. The HTML is parsed (416) by JavaScript content filter 404 and content is downloaded from network resource 405. JavaScript content filter 404 may request (417) additional filter rules from server 403. Content received (418) from network resource 405 is analyzed (419) by JavaScript content filter 404 and displayed in browser 401 when it is not prohibited by the filter rules.

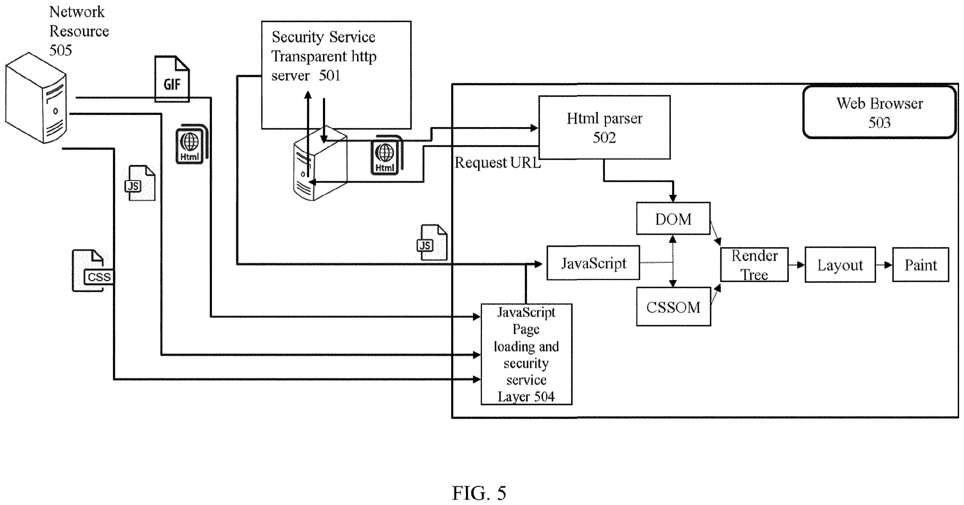

Reference is now made to FIG. 5, which is a schematic illustration of rendering flow using JavaScript VMM Layer, according to some embodiments of the present invention. The security service transparent http 501 sends back to the html parser 502 of the web browser 503 an empty html with page loading and a security service packages in javaScript with the requested URL embedded in the page. The JavaScript page loading and security service layer 504 of web browser 503 then receives all network data directly from network resource 505.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant content filtering services will be developed and the scope of the term content filtering is intended to include all such new technologies *a priori*.

The terms "comprises", "comprising", "includes", "including", "having" and their conjugates mean "including but not limited to". This term encompasses the terms "consisting of' and "consisting essentially of'.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A system of providing a content filtering service, comprising:
a network interface (121) adapted to receive from a client terminal (102) via a network a request for retrieving network data from at least one network resource (103);
a store code (131) for storing a code to transmit to said client terminal (102) a client side security script (132) in response to said request; and
a processor (111), connected to said network interface (121) and said store code (131), and adapted to execute said code for transmitting said client side security script (132) to said client terminal;
wherein said client side security script (132) is adapted to be interpreted at said client terminal (102) for authenticating the rendering of at least part of said network data from the at least one network resource (103);
wherein said client side security script (132) is adapted to be executed by a client side processor (112) of said client terminal (102) for authenticating the rendering of at least part of said network data by verifying a compliance of said network data with at least one condition and for presenting said network data based on a detection of said compliance;
wherein said code comprises instructions to:
extract an identifier of said client from said request,
authenticate said identifier, and
instruct a routing device (104) of said network to open a data flow for a direct retrieval of said network data from said at least one network resource (103) by said client side security script (132); and
wherein said code comprises instructions to:
provide said routing device with a first key;
provide said client with a second key; and
wherein when said client side security script (132) sends a request for a network resource to said routing device (145), the request includes said second key, said routing device (104) matches between said first key and said second key for verifying said direct retrieval.

2. The system of claim 1, wherein said client side security script (132) is adapted to receive authentication data and install in a browser or an application running on said client terminal (102) a browser cookie generated based on said authentication data for supporting a data flow between said network resource (103) and said client terminal (102).

3. The system of any of the previous claims, further comprising a web server (105) providing a plurality of communications channels with a plurality of network resources (103) over a single Transmission Control Protocol (TCP) connection for routing said network data to said client side security script (132).

4. The system of any of the previous claims, wherein said client side security script (132) is executed by the client side processor (112) in a restricted operating system environment.

5. The system of any of the previous claims, wherein said client side security script (132) is adapted to be executed by a client side processor (112) of said client terminal (102) for:
transmitting said request for retrieving network data from said at least one network resource (103) from said client terminal (102),
receiving said network data from said at least one network resource (103),
verifying a compliance of said network data with at least one condition, and
parsing at least some of said network data according to said verification.

6. The system of any of the previous claims, wherein said client side security script (132) is a virtual machine monitor (VMM) running a security service code and a security service abstraction layer for processing said network data.

7. The system of any of the previous claims, wherein said client side security script (132) is a virtual machine monitor (VMM) running a Document Object Model (DOM) builder and a HyperText Markup Language (HTML) parser for loading and rendering at least some of said network data on a display of said client terminal (102).

8. The system of any of the previous claims, wherein said system is implemented as a proxy server handling a plurality of requests from a plurality of clients for retrieving a plurality of different network documents from a plurality of network resources which are accessible via said network.

9. The system of claim 8, wherein said network interface is adapted to receive said plurality of requests from a plurality of different client terminals;
wherein said code comprises instructions to transmit a plurality of client side security scripts each in response to one of said plurality of requests;
wherein each one of said plurality of client side security scripts is adapted to be executed by a client side processor for authenticating the rendering of at least part of respective said network data.

10. A method for providing a content filtering service using a system according to any one of claims 1 to 9, the method comprising:
receiving from a client terminal (102) via a network a request for retrieving network data from at least one network resource (103);
transmitting to said client terminal (102) a client side security script (132) in response to said request; and
wherein said client side security script (132) is adapted to be interpreted at said client terminal (102) for authenticating the rendering of at least part of said network data from the at least one network resource (103);
wherein said client side security script (132) is adapted to be executed by a client side processor (112) of said client terminal (102) for authenticating the rendering of at least part of said network data by verifying a compliance of said network data with at least one condition and for presenting said network data based on a detection of said compliance;
wherein the method further comprises
extracting an identifier of said client from said request,
authenticating said identifier, and
instructing a routing device (104) of said network to open a data flow for a direct retrieval of said network data from said at least one network resource (103) by said client side security script (132); and
wherein the method further comprises:
providing said routing device with a first key;
providing said client with a second key; and
wherein when said client side security script (132) sends a request for a network resource to said routing device (145), the request includes said second key, said routing device (104) matches between said first key and said second key for verifying said direct retrieval.

11. A computer program product comprising a readable storage medium storing program code, the program code comprising a set of instructions which when executed by a computer cause the computer to perform the method according to claim 10.

## Patentansprüche

1. System zum Bereitstellen eines Inhaltsfilterdienstes, umfassend:
eine Netzwerkschnittstelle (121), die geeignet ist zum Empfangen von einem Client-Endgerät (102) über ein Netzwerk einer Anforderung zum Abrufen von Netzwerkdaten von mindestens einer Netzwerkressource (103);
einen Speichercode (131) zum Speichern eines Codes, um ein Client-seitiges Sicherheitsskript (132) als Reaktion auf die Anforderung an das Client-Endgerät (102) zu übertragen; und
einen Prozessor (111), der mit der Netzwerkschnittstelle (121) und dem Speichercode (131) verbunden ist und der geeignet ist zum Ausführen des Codes, um das Client-seitige Sicherheitsskript (132) an das Client-Endgerät zu übertragen;
wobei das Client-seitige Sicherheitsskript (132) geeignet ist, um in dem Client-Endgerät (102) zum Authentifizieren der Wiedergabe mindestens eines Teils der Netzwerkdaten von der mindestens einen Netzwerkressource (103) interpretiert zu werden;
wobei das Client-seitige Sicherheitsskript (132) geeignet ist, um von einem Client-seitigen Prozessor (112) des Client-Endgeräts (102) zum Authentifizieren der Wiedergabe mindestens eines Teils der Netzwerkdaten, indem eine Einhaltung mindestens einer Bedingung durch die Netzwerkdaten verifiziert wird, und zum Darstellen der Netzwerkdaten aufgrund des Erkennens der Einhaltung ausgeführt zu werden;
wobei der Code Befehle umfasst zum:
Extrahieren einer Kennung des Clients aus der Anforderung,
Authentifizieren der Kennung und
Anweisen einer Routing-Vorrichtung (104) des Netzwerks, einen Datenfluss für ein direktes Abrufen der Netzwerkdaten von der mindestens einen Netzwerkressource (103) durch das Client-seitige Sicherheitsskript (132) zu öffnen; und
wobei der Code Befehle umfasst zum:
Bereitstellen eines ersten Schlüssels für die Routing-Vorrichtung;
Bereitstellen eines zweiten Schlüssels für den Client; und
wobei, wenn das Client-seitige Sicherheitsskript (132) eine Anforderung für eine Netzwerkressource an die Routing-Vorrichtung (145) sendet, die Anforderung den zweiten Schlüssel enthält, und wobei die Routing-Vorrichtung (104) einen Abgleich zwischen dem ersten Schlüssel und dem zweiten Schlüssel ausführt, um das direkte Abrufen zu verifizieren.

2. System nach Anspruch 1, wobei das Client-seitige Sicherheitsskript (132) geeignet ist zum Empfangen von Authentifizierungsdaten und zum Installieren eines Browser-Cookies, das aufgrund der Authentifizierungsdaten zum Unterstützen eines Durchflusses zwischen der Netzwerkressource (103) und dem Client-Endgerät (102) erzeugt wird, in einem Browser oder einer Anwendung, die in dem Client-Endgerät (102) abläuft.

3. System nach einem der vorhergehenden Ansprüche, das außerdem einen Webserver (105) umfasst, der eine Vielzahl von Kommunikationskanälen mit einer Vielzahl von Netzwerkressourcen (103) über eine einzige Übertragungssteuerprotokollverbindung (Transmission Control Protocol connection, TCP-Verbindung) zum Routen der Netzwerkdaten zu dem Client-seitigen Sicherheitsskript (132) bereitstellt.

4. System nach einem der vorhergehenden Ansprüche, wobei das Client-seitige Sicherheitsskript (132) durch den Client-seitigen Prozessor (112) in einer eingeschränkten Betriebssystemumgebung ausgeführt wird.

5. System nach einem der vorhergehenden Ansprüche, wobei das Client-seitige Sicherheitsskript (132) geeignet ist, um durch einen Client-seitigen Prozessor (112) des Client-Endgeräts (102) ausgeführt zu werden zum:
Übertragen der Anforderung zum Abrufen von Netzwerkdaten von der mindestens einen Netzwerkressource (103) von dem Client-Endgerät (102),
Empfangen der Netzwerkdaten von der mindestens einen Netzwerkressource (103), Verifizieren einer Einhaltung mindestens einer Bedingung durch die Netzwerkdaten, und
Analysieren mindestens einiger der Netzwerkdaten gemäß der Verifizierung.

6. System nach einem der vorhergehenden Ansprüche, wobei das Client-seitige Sicherheitsskript (132) eine virtuelle Maschinenüberwachung (Virtual Machine Monitor, VMM) ist, in der ein Sicherheitsdienstcode und eine Sicherheitsdienstabstraktionsschicht zum Verarbeiten der Netzwerkdaten abläuft.

7. System nach einem der vorhergehenden Ansprüche, wobei das Client-seitige Sicherheitsskript (132) eine virtuelle Maschinenüberwachung (VMM) ist, in der ein Builder für ein objektorientiertes Dokumentenmodell (Document Object Model builder, DOM) und ein HTML-Parser (HyperText Markup Language parser) zum Laden und Wiedergeben von mindestens einigen der Netzwerkdaten auf einer Anzeige des Client-Endgeräts (102) ablaufen.

8. System nach einem der vorhergehenden Ansprüche, wobei das System als ein Proxy-Server umgesetzt ist, der eine Vielzahl von Anforderungen von einer Vielzahl von Clients zum Abrufen einer Vielzahl von verschiedenen Netzwerkdokumenten von einer Vielzahl von Netzwerkressourcen erledigt, die über das Network zugänglich sind.

9. System nach Anspruch 8, wobei die Netzwerkschnittstelle geeignet ist zum Empfangen der Vielzahl von Anforderungen von einer Vielzahl von verschiedenen Client-Endgeräten;
wobei der Code Befehle zum Übertragen einer Vielzahl von Client-seitigen Sicherheitsskripts jeweils als Reaktion auf eine der Vielzahl von Anforderungen umfasst;
wobei jeder aus der Vielzahl von Client-seitigen Sicherheitsskripts geeignet ist, um durch einen Client-seitigen Prozessor zum Authentifizieren der Wiedergabe mindestens eines Teils von jeweiligen Netzwerkdaten ausgeführt zu werden.

10. Verfahren zum Bereitstellen eines Inhaltsfilterdienstes mithilfe eines Systems nach einem der Ansprüche 1 bis 9, wobei das Verfahren umfasst:
Empfangen von einem Client-Endgerät (102) über ein Netzwerk einer Anforderung zum Abrufen von Netzwerkdaten von mindestens einer Netzwerkressource (103);
Übertragen, als Reaktion auf die Anforderung, eines Client-seitigen Sicherheitsskripts (132) an das Client-Endgerät (102); und
wobei das Client-seitige Sicherheitsskript (132) geeignet ist, um in dem Client-Endgerät (102) zum Authentifizieren der Wiedergabe mindestens eines Teils der Netzwerkdaten von der mindestens einen Netzwerkressource (103) interpretiert zu werden;
wobei das Client-seitige Sicherheitsskript (132) geeignet ist, um von einem Client-seitigen Prozessor (112) des Client-Endgeräts (102) zum Authentifizieren der Wiedergabe mindestens eines Teils der Netzwerkdaten, indem eine Einhaltung mindestens einer Bedingung durch die Netzwerkdaten verifiziert wird, und zum Darstellen der Netzwerkdaten aufgrund des Erkennens der Einhaltung ausgeführt zu werden;
wobei das Verfahren außerdem umfasst:
Extrahieren einer Kennung des Clients aus der Anforderung,
Authentifizieren der Kennung und
Anweisen einer Routing-Vorrichtung (104) des Netzwerks, einen Datenfluss für ein direktes Abrufen der Netzwerkdaten von der mindestens einen Netzwerkressource (103) durch das Client-seitige Sicherheitsskript (132) zu öffnen; und
wobei das Verfahren außerdem umfasst:
Bereitstellen eines ersten Schlüssels für die Routing-Vorrichtung;
Bereitstellen eines zweiten Schlüssels für den Client; und
wobei, wenn das Client-seitige Sicherheitsskript (132) eine Anforderung für eine Netzwerkressource an die Routing-Vorrichtung (145) sendet, die Anforderung den zweiten Schlüssel enthält, und wobei die Routing-Vorrichtung (104) einen Abgleich zwischen dem ersten Schlüssel und dem zweiten Schlüssel ausführt, um das Abrufen zu verifizieren.

11. Computerprogrammprodukt, das ein lesbares Speichermedium umfasst, in dem ein Programmcode gespeichert ist, wobei der Programmcode einen Befehlssatz umfasst, der, wenn er durch einen Computer ausgeführt wird, den Computer veranlasst, das Verfahren nach Anspruch 10 auszuführen.

## Revendications

1. Système de fourniture d'un service de filtrage de contenu, comportant :
une interface (121) de réseau prévue pour recevoir en provenance d'un terminal client (102), via un réseau, une demande de récupération de données de réseau à partir d'au moins une ressource (103) de réseau ;
un code (131) de mémoire servant à stocker un code à transmettre audit terminal client (102) un script (132) de sécurité côté client en réponse à ladite demande ; et
un processeur (111), relié à ladite interface (121) de réseau et audit code (131) de mémoire, et prévu pour exécuter ledit code afin de transmettre ledit script (132) de sécurité côté client audit terminal client ;
ledit script (132) de sécurité côté client étant prévu pour être analysé syntaxiquement au niveau dudit terminal client (102) pour authentifier la restitution d'au moins une partie desdites données de réseau à partir de la ou des ressources (103) de réseau ;
ledit script (132) de sécurité côté client étant prévu pour être exécuté par un processeur (112) côté client dudit terminal client (102) pour authentifier la restitution d'au moins une partie desdites données de réseau en validant une conformité desdites données de réseau à au moins une condition et pour présenter lesdites données de réseau sur la base d'une détection de ladite conformité ;
ledit code comportant des instructions pour :
extraire de ladite demande un identifiant dudit client,
authentifier ledit identifiant, et
donner comme instruction à un dispositif (104) de routage dudit réseau d'ouvrir un flux de données pour une récupération directe desdites données de réseau à partir de ladite ou desdites ressources (103) de réseau par ledit script (132) de sécurité côté client ; et
ledit code comportant des instructions pour :
munir ledit dispositif de routage d'une première clé ;
munir ledit client d'une seconde clé ; et
lorsque ledit script (132) de sécurité côté client envoie une demande d'une ressource de réseau audit dispositif (145) de routage, la demande comprenant ladite seconde clé, ledit dispositif (104) de routage mettant en correspondance ladite première clé et ladite seconde clé pour valider ladite récupération directe.

2. Système selon la revendication 1, ledit script (132) de sécurité côté client étant prévu pour recevoir des données d'authentification et installer dans un navigateur ou une application s'exécutant sur ledit terminal client (102) un témoin de navigateur généré d'après lesdites données d'authentification pour prendre en charge un flux de données entre ladite ressource (103) de réseau et ledit terminal client (102).

3. Système selon l'une quelconque des revendications précédentes, comportant en outre un serveur web (105) mettant en place une pluralité de canaux de communications avec une pluralité de ressources (103) de réseau sur une seule connexion sous protocole de commande de transmission (TCP) pour acheminer lesdites données de réseau jusqu'audit script (132) de sécurité côté client.

4. Système selon l'une quelconque des revendications précédentes, ledit script (132) de sécurité côté client étant exécuté par le processeur (112) côté client dans un environnement réservé de système d'exploitation.

5. Système selon l'une quelconque des revendications précédentes, ledit script (132) de sécurité côté client étant prévu pour être exécuté par un processeur (112) côté client dudit terminal client (102) pour :
transmettre ladite demande de récupération de données de réseau à partir de ladite ou desdites ressources (103) de réseau en provenance dudit terminal client (102),
recevoir lesdites données de réseau provenant de ladite ou desdites ressources (103) de réseau,
valider une conformité desdites données de réseau à au moins une condition, et interpréter au moins une partie desdites données de réseau selon ladite validation.

6. Système selon l'une quelconque des revendications précédentes, ledit script (132) de sécurité côté client étant un moniteur de machine virtuelle (VMM) exécutant un code de service de sécurité et une couche d'abstraction de service de sécurité pour traiter lesdites données de réseau.

7. Système selon l'une quelconque des revendications précédentes, ledit script (132) de sécurité côté client étant un moniteur de machine virtuelle (VMM) exécutant un constructeur de modèle d'objet documentaire (DOM) et un analyseur syntaxique de langage de balisage hypertexte (HTML) pour charger et restituer au moins une partie desdites données de réseau sur un affichage dudit terminal client (102).

8. Système selon l'une quelconque des revendications précédentes, ledit système étant mis en œuvre comme un serveur mandataire gérant une pluralité de demandes provenant d'une pluralité de clients pour récupérer une pluralité de documents de réseau différents à partir d'une pluralité de ressources de réseau qui sont accessibles via ledit réseau.

9. Système selon la revendication 8, ladite interface de réseau étant prévue pour recevoir ladite pluralité de demandes en provenance d'une pluralité de terminaux clients différents ;
ledit code comportant des instructions pour transmettre une pluralité de scripts de sécurité côté client, chacun en réponse à une demande de ladite pluralité de demandes ;
chaque script de ladite pluralité de scripts de sécurité côté client étant prévu pour être exécuté par un processeur côté client afin d'authentifier la restitution d'au moins une partie desdites données respectives de réseau.

10. Procédé de fourniture d'un service de filtrage de contenu à l'aide d'un système selon l'une quelconque des revendications 1 à 9, le procédé comportant les étapes consistant à ;
recevoir en provenance d'un terminal client (102), via un réseau, une demande de récupération de données de réseau à partir d'au moins une ressource (103) de réseau ; transmettre audit terminal client (102) un script (132) de sécurité côté client en réponse à ladite demande ; et
ledit script (132) de sécurité côté client étant prévu pour être analysé syntaxiquement au niveau dudit terminal client (102) afin d'authentifier la restitution d'au moins une partie desdites données de réseau à partir de la ou des ressources (103) de réseau ; ledit script (132) de sécurité côté client étant prévu pour être exécuté par un processeur (112) côté client dudit terminal client (102) afin d'authentifier la restitution d'au moins une partie desdites données de réseau en vérifiant une conformité desdites données de réseau à au moins une condition et pour présenter lesdites données de réseau sur la base d'une détection de ladite conformité ;
le procédé comportant en outre les étapes consistant à
extraire un identifiant dudit client de ladite demande,
authentifier ledit identifiant, et
donner comme instruction à un dispositif (104) de routage dudit réseau d'ouvrir un flux de données pour une récupération directe desdites données de réseau à partir de ladite ou desdites ressources (103) de réseau par ledit script (132) de sécurité côté client ; et
le procédé comportant en outre les étapes consistant à :
munir ledit dispositif de routage d'une première clé ;
munir ledit client d'une seconde clé ; et
lorsque ledit script (132) de sécurité côté client envoie une demande d'une ressource de réseau audit dispositif (145) de routage, la demande comprenant ladite seconde clé, ledit dispositif (104) de routage mettant en correspondance ladite première clé et ladite seconde clé pour valider ladite récupération directe.

11. Produit de programme informatique comportant un support de stockage lisible conservant du code de programme, le code de programme comportant un ensemble d'instructions qui, lorsqu'elles sont exécutées par un ordinateur, amènent l'ordinateur à réaliser le procédé selon la revendication 10.
